# FASCICULE DE BREVET EUROPEEN

(11) **EP 0 394 895 B1**
(45) Date de publication et mention de la délivrance du brevet: **22.11.1995**
(21) Numéro de dépôt: 90107618.2
(22) Date de dépôt: 23.04.1990
(51) Int. Cl.: H04M 11/06

(54) **Adaptateur de communication pour terminal de téléaction**
Übertragungsadapter für das Endgerät eines Fernwirksystems
Communication adapter for remote control terminal

(30) Priorité: 25.04.1989 FR 8905466
(43) Date de publication de la demande: 31.10.1990
(73) Titulaire: ALCATEL CIT, 75008 Paris (FR)
(72) Inventeur: Marquet, Alain, F-91510 Lardy (FR); Tanguy, Jacques, F-92160 Antony (FR)
(74) Mandataire: Weinmiller, Jürgen

(56) Documents cités:
- EP-A- 0 050 451
- EP-A- 0 295 029
- US-A- 4 332 980
- IEEE GLOBAL TELECOMMUNICATIONS CONFERENCE, New Orleans, 2-5 décembre 1985, vol. 3, IEEE, New York, US pages 1439 - 1442; J.P. Carise et al:: "ASTARTE - Telematic Secured Access to the Teleaction Network"
- Commutation & Transmission vol. 8, no. 2, 1986, Paris, FR pages 65 - 78; J.P. Carise et al.: "ASTARTE: un réseau multiservice de téléaction"
- Mini-Micro Systems vol. 17, no. 3, mars 1984, Denver, Colorado, US pages 184 - 188; H. Morgan: "Two-wire Full Duplex Modem Simplifies Voice and Data Networking"

## Description

L'invention concerne un adaptateur de communication pour terminal de téléaction.

La téléaction couvre un ensemble d'applications diverses, telles que la télésurveillance, la télécommande à grande distance, la télémesure, la télégestion, dans lesquelles ont lieu des échanges de messages courts entre des appareillages terminaux et des serveurs spécialisés reliés entre eux par un ou plusieurs réseaux mono ou multiservices de télécommunications.

Dans une forme de réalisation connue, on connecte les terminaux de téléaction en parallèle avec des postes téléphoniques de manière à profiter de l'infrastructure du réseau téléphonique et en particulier des lignes téléphoniques déjà établies pour transmettre les signaux de téléaction et les signaux téléphoniques par les mêmes lignes téléphoniques, mais dans des bandes séparées de fréquences pour éviter les interactions.

Les serveurs, sont raccordés à des ports du réseau de téléaction. D'autres ports du réseau de téléaction sont reliés à des lignes téléphoniques par l'intermédiaire de coupleurs complémentaires de ceux par lesquels les terminaux de téléaction se connectent en parallèle aux postes téléphoniques, à l'autre extrémité des lignes téléphoniques par rapport aux coupleurs complémentaires.

Dans la plupart des applications, il importe que les serveurs puissent vérifier la présence et les possibilités de communication des terminaux qu'ils télécontrôlent pour éviter d'envoyer inutilement des messages si un terminal est déconnecté ou incapable de communiquer convenablement.

On s'efforce donc de réaliser un contrôle permanent de manière que tant les serveurs que les terminaux soient informés en cas de défaillance susceptible de perturber ou d'empêcher les échanges d'informations.

Ceci doit préférablement être obtenu avec une grande sécurité et au moyen de dispositifs simples et fiables.

L'article "ASTARTE: un réseau multiservice de téléaction" de J.P. CARISE et al, paru en 1986 dans les pages 65-78 du n° 2, volume 8 de la revue "Commutation et Transmission", Paris (FR) divulgue un réseau multiservice de téléaction du type de celui envisagé dans la présente demande. Il y est prévu de desservir des terminaux de téléaction pour usager qui sont associés à des postes téléphoniques avec lesquels ils sont reliés en parallèle aux mêmes lignes téléphoniques par l'intermédiaire de coupleurs, les postes et les terminaux exploitant des bandes de fréquences distinctes. Les lignes téléphoniques aboutissent à d'autres coupleurs permettant de desservir soit le réseau téléphonique commuté, soit des concentrateurs de téléaction reliés aux serveurs de desserte des terminaux par un réseau de commutation de paquets.

Les concentrateurs communiquent avec les terminaux par voie supraphonique et dialoguent selon une procédure cyclique d'interrogation et de réponse. Dans le cadre d'une procédure d'exploitation, le cycle d'interrogation constitue une veille technique dont toute rupture est analysée et donne lieu à l'envoi d'une signalisation caractéristique dite message de défaut vers un poste d'exploitation du réseau de téléaction et vers les serveurs.

L'invention propose donc un adaptateur de communication pour terminal de téléaction pour réseau de téléaction du type évoqué ci-dessus. Un tel terminal est prévu connecté à une ligne téléphonique en parallèle avec un poste téléphonique et relié à un réseau de téléaction par la ligne téléphonique pour échanger des informations de téléaction avec au moins un serveur de ce réseau dans le cadre d'une procédure d'exploitation où il est prévu un dialogue à l'alternat entre le terminal et le réseau de téléaction, dans une bande de fréquences différente de celle exploitée par le poste téléphonique en parallèle, et un envoi d'une signalisation caractéristique, ou message de défaut, par un dispositif de télésignalisation doté de moyens pour déclencher l'envoi de cette signalisation caractéristique en cas d'absence de dialogue au delà d'un laps de temps prédéterminé.

Selon une caractéristique de l'invention, l'adaptateur comporte un émetteur-récepteur de données binaires fonctionnant par saut de fréquence, entre deux fréquences de la bande différente de celle exploitée par le poste (de même que le réseau de téléaction avec lequel il dialogue), les moyens de déclenchement de signalisation caractéristique d'absence de dialogue comportant un dispositif détecteur de porteuse, dans un agencement récepteur de l'émetteur-récepteur, pour déclencher un compteur lent, positionnant un agencement émetteur de l'émetteur-récepteur en émission d'une des fréquences caractéristiques, au delà du laps de temps que fixe par comptage ce compteur lent, activé par un oscillateur, après une perte de porteuse.

L'invention, ses caractéristiques et ses avantages sont précisés dans la description qui suit en liaison avec les figures évoquées ci-dessous.

La figure 1 présente un schéma de principe d'un ensemble associant un système de téléaction à un système de télécommunications.

La figure 2 présente un adaptateur de communication, selon l'invention, pour terminal de téléaction.

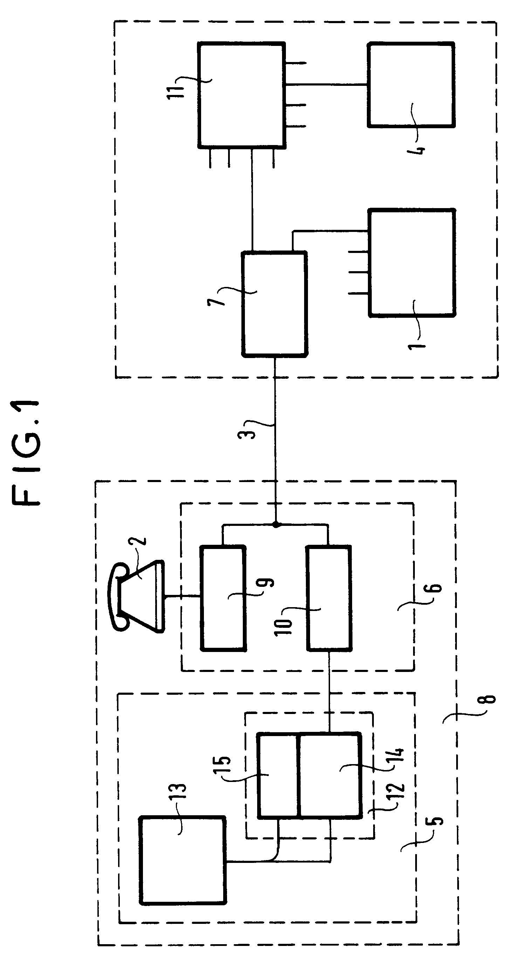

Le schéma de principe proposé en figure 1 montre un exemple d'organisation d'un système de téléaction autour d'un système de télécommunications généralement préexistant.

Ce dernier comporte un réseau téléphonique 1 organisé autour d'au moins un autocommutateur, non représenté, pour permettre la mise en communication de postes ou terminaux téléphoniques symbolisés ici par un poste 2. Chaque poste 2 est relié par une ligne téléphonique 3 au reste du réseau téléphonique 1, au niveau d'un autocommutateur de rattachement.

Le système de téléaction comporte au moins un serveur 4 et une pluralité de terminaux de téléaction tel 5 avec lesquels le serveur communique au travers d'un réseau de téléaction 11.

Dans la mesure où les réseaux téléphoniques ont une couverture géographique existante qui est très étendue et pour éviter l'installation de nouvelles liaisons vers les abonnés existants pour des applications susceptibles d'emprunter les mêmes supports de transmission, il est prévu d'utiliser les lignes reliant les postes téléphoniques 2 à leur centre de rattachement pour transmettre les signaux de téléaction vers les lieux où sont ces postes.

Le raccordement d'un terminal de téléaction 5 à l'extrémité d'une ligne téléphonique 3, en parallèle avec un poste 2 sur le lieu où ce dernier est installé, permet la mise en communication de ce terminal de téléaction avec un serveur 4 distant, à partir du moment où le réseau de téléaction 11 auquel est raccordé ce serveur est susceptible d'être relié à l'autre extrémité de la ligne et où les signaux de téléaction ne se confondent pas avec les signaux téléphoniques. Cette dernière exigence est satisfaite par exemple par transmission des signaux de téléaction en bande supraphonique, hors de la bande téléphonique.

Un coupleur 6, dit d'abonné, et un coupleur 7, dit de ligne, situés aux extrémités opposées de la ligne téléphonique 3 permettent de séparer le trafic téléphonique du trafic de téléaction à ces deux extrémités.

Le coupleur d'abonné 6 relie le poste 2 et le terminal de téléaction 5 à la ligne 3, il fait partie avec eux d'une unité de communication 8 rassemblant les divers appareillages connectés à cette ligne au lieu où est situé le poste.

Ce coupleur d'abonné 6 comporte essentiellement deux filtres 9 et 10 connectés d'une part en parallèle en extrémité de la ligne 3 et d'autre part séparément l'un au poste 2, l'autre au terminal de téléaction 5. Il transmet sur la ligne 3 les signaux fournis en bande téléphonique par le poste 2 et ceux fournis en bande supraphonique par le terminal de téléaction 5 ; il aiguille vers le poste 2 par l'intermédiaire du filtre 9, de type passe-bas, les signaux reçus en bande téléphonique via la ligne 3 et vers le terminal de téléaction 5 au moyen du filtre 10, de type passe-haut, les signaux en bande supraphonique arrivant aussi au coupleur d'abonné par la ligne 3.

Le coupleur de ligne 7 est semblable au coupleur d'abonné 6, il associe les signaux téléphoniques et de téléaction destinés à être transmis à l'unité de communication 8 et aiguille les signaux reçus de la ligne 3, en fonction de leurs fréquences, vers le réseau téléphonique 1 ou vers le réseau de téléaction 11 à un port duquel est raccordé le serveur 4.

Ce réseau 11 est préféré au réseau téléphonique 1 au niveau central où une pluralité de serveurs 4 est susceptible de s'occuper d'un grand nombre de terminaux de téléaction au travers de concentrateurs, non représentés, un tel arrangement ne sera pas développé ici, car il n'a qu'un rapport indirect avec l'invention.

Le coupleur de ligne 7 se raccorde alors à un port de chacun des réseaux 1 et 11 et en reçoit donc des signaux localisés dans des bandes de fréquences non interférentes.

Les signaux en bande supraphonique circulant entre le terminal de téléaction 5 et la ligne 3, via le filtre 10, sont émis ou reçus par un adaptateur de communication 12 de ce terminal. Cet adaptateur est relié à cet effet à une interface 13 assurant la liaison du terminal avec son environnement tant matériel qu'humain.

L'interface 13 qui est par exemple organisée autour d'une logique, usuellement constituée par un processeur et des mémoires, permet au terminal de téléaction 5 d'exécuter des ordres par l'intermédiaire d'actionneurs, d'en recevoir par exemple au travers d'un clavier, d'effectuer des relevés par l'intermédiaire de capteurs et d'échanger des informations avec un ou plusieurs serveurs 4 qui la télécommandent et qu'elle informe via la ligne téléphonique 3.

A cet effet, l'interface 13 est bidirectionnellement liée à l'adaptateur de communication 12 qui convertit les signaux logiques codés par tout ou rien transmis par l'interface en signaux codés binairement par sauts de fréquence en vue de leur transmission en bande supraphonique par la ligne 3 et qui assure une conversion en sens inverse pour les signaux transmis dans cette même bande supraphonique par la ligne vers le terminal de téléaction 5.

Il est à noter que l'adaptateur de communication 12 et le coupleur 6 sont susceptibles d'être associés au terminal de téléaction 5 et au poste téléphonique 2 de plusieurs manières équivalentes. Dans la réalisation représentée, l'adaptateur de communication 12 est supposé intégré dans le terminal de téléaction avec l'interface 13 et éventuellement le coupleur 6, de manière comparable cet adaptateur de communication 12 peut être intégré avec le coupleur 6 en un module séparé du poste téléphonique 2 et du terminal de téléaction 5, ou encore intégré avec le coupleur dans le poste.

Dans l'exemple présenté, l'adaptateur de communication 12, qui échange des signaux numériques avec l'interface 13, communique à bas débit avec le réseau 11, via la ligne téléphonique 3, par l'intermédiaire de signaux binaires codés à l'aide de fréquences F1 et F2 situées dans la bande supraphonique, par exemple à égale distance d'une fréquence centrale de cinquante cinq kilohertz.

Un émetteur-récepteur 14 génère et capture les signaux dont les fréquences sont F1 et F2 et qui sont à transmettre ou transmis par la ligne téléphonique 3.

Les communications supervisées par le réseau 11 pour une application donnée sont ici déclenchées par ce réseau qui interroge cycliquement le terminal de téléaction 5 concerné par l'application. L'alternat est réalisé sur la ligne téléphonique 3, un laps de temps est accordé au réseau et le laps de temps suivant au terminal.

Un dispositif de télésignalisation 15 est associé à l'émetteur-récepteur 14 dans l'adapteur de communication 12 pour informer, via le réseau 11 auquel le terminal de téléaction 5 est relié, le serveur 4 qui gère l'application considérée de la présence effective ou non de ce terminal en bout de ligne téléphonique 3. Le serveur prend les mesures déterminées pour l'application considérée lorsque le terminal de téléaction ne répond pas, par exemple il est susceptible de déclencher une alarme en cas de non réponse de ce dernier à une interrogation, dans le cas d'un terminal de télésurveillance.

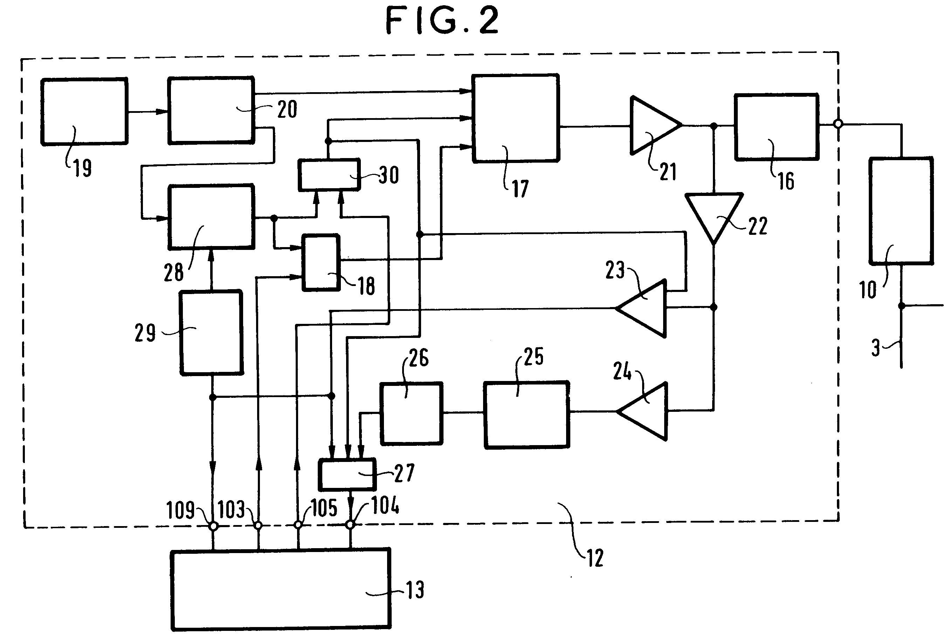

La figure 2 présente le schéma d'un adaptateur de communication 12 associé d'une part à une interface 13 de liaison d'un terminal de téléaction à son environnement et d'autre part à un filtre passe-haut 10 qui le relie à une ligne téléphonique 3.

Comme indiqué plus haut, cet adaptateur de communication 12 comporte un émetteur-récepteur pour transmettre, par saut de fréquence de l'une à l'autre de deux fréquences F1 et F2 et vers le réseau 11, les signaux logiques binaires reçus de l'interface 13 et pour transcoder les signaux reçus sous la même forme du réseau 11 en signaux logiques binaires acceptables par cette interface 13.

A cet effet, l'adaptateur est relié à l'interface 13 par au moins quatre fils référencés 103, 104, 105 et 109 qui permettent respectivement le transfert des données de l'interface à l'adaptateur, le transfert de données en sens inverse, l'envoi de demande d'émission à partir de l'interface et l'envoi d'une indication de présence de porteuse par l'adaptateur, cette dernière est obtenue lorsqu'il y a émission sur la ligne téléphonique 3 par le réseau 11, dans la bande supraphonique choisie.

L'adaptateur de communication 12 est aussi relié au filtre passe-haut 10, de l'autre côté de celui-ci par rapport à la ligne 3, il comporte un filtre passe-bande 16 par lequel transitent les signaux émis ou reçus en bande supraphonique par le terminal de téléaction 5, au travers de cette ligne 3.

Les données binaires reçues à faible débit de l'interface 13 via le fil 103 sont transcodées par saut de fréquence de l'une à l'autre des fréquences F1 et F2, en fonction de leurs valeurs logiques individuelles.

En ce but, le fil 103 est relié à une entrée de commande d'un diviseur programmable de fréquence 17, via une porte de contrôle 18.

L'entrée d'horloge du diviseur programmable 17 reçoit les signaux d'un oscillateur 19, via un diviseur fixe de fréquence 20 à sorties multiples. Les signaux d'horloge appliqués au diviseur programmable 17 sont par exemple à une fréquence de l'ordre du mégahertz et cette fréquence est abaissée à des valeurs de l'ordre de cinquante-trois et cinquante-sept kilohertz pour donner les signaux F1 et F2, suivant le niveau logique binaire un ou zéro du signal fourni à l'entrée de commande du diviseur programmable 17 par le fil 103.

Les signaux de fréquence F1 ou F2 alternativement produits par le diviseur programmable 17 sont transmis à la ligne téléphonique 3 par un étage de puissance 21, au travers des filtres 16 et 10 en série.

Cet étage de puissance 21 est par exemple constitué de deux déclencheurs ou triggers parallèles associés à un pont diviseur à résistances pour réaliser l'adaptation au filtre passe-bande 16, en impédance et en puissance, pour les signaux de fréquences F1 et F2, la structure classique de cet étage n'étant pas représentée ici.

Le filtre 16, de type passif, dont la structure classique n'est pas non plus représentée, comporte essentiellement deux bobinages associés à un ensemble de condensateurs de manière à limiter et mettre en forme le spectre de chacun des deux signaux de fréquences F1 et F2 avant émission sur la ligne téléphonique 3, il comporte aussi un transformateur assurant l'isolement galvanique entre la ligne 3 et le terminal de téléaction et participant au filtrage.

Les signaux reçus par ce terminal de téléaction au travers de la ligne 3 sont transmis par le filtre passe-bande 16 à un étage récepteur, après filtrage au travers de ce filtre 16 commun à l'émission et à la réception.

A cet effet, un circuit amplificateur-écrêteur 22 est connecté au filtre 16 en un point commun qu'il partage avec la sortie de l'étage de puissance 21. Ce circuit amplificateur-écrêteur 22 est par exemple composé de deux amplificateurs associés à un écrêteur à diodes selon un agencement classique non représenté.

Le signal de sortie du circuit amplificateur-écrêteur 22 est appliqué à l'entrée d'un circuit détecteur de porteuse 23 structuré par exemple autour d'un comparateur qui est monté en détecteur de crête et qui fournit un signal logique binaire caractéristique de détection à réception d'un signal dont le niveau est supérieur à un niveau prédéterminé de réception, lui-même fixé par l'intermédiaire d'un pont diviseur à résistances, selon une solution classique non représentée.

Le signal de sortie du circuit amplificateur-écrêteur 22 est également appliqué à une entrée d'un détecteur 24 de passage par zéro du signal qui est situé en amont d'un démodulateur 25.

Le détecteur 24 est par exemple organisé autour d'un comparateur qui reçoit d'une part le signal de sortie du circuit amplificateur-écrêteur 22, d'autre part un signal prédéterminé présent sur une entrée non illustrée et qui en déduit des signaux rectangulaires de rapport cyclique un et de fréquence F1 ou F2 suivant la fréquence du signal reçu. Ces signaux rectangulaires sont appliqués à l'entrée du démodulateur 25 qui est par exemple constitué par un registre à décalage recevant un signal du diviseur 20 à une entrée d'horloge et les signaux rectangulaires à une entrée de données et attaquant, par deux sorties décalées l'une par rapport à l'autre, les deux entrées d'une porte, de type ou-exclusif, le registre, la porte et la liaison avec le diviseur 20 n'étant pas représentés ici.

La sortie du démodulateur 25 fournit un signal dont le rapport cyclique est variable en fonction de l'écart de fréquence du signal reçu par rapport à une fréquence centrale pour laquelle le rapport cyclique est un, cette fréquence étant de l'ordre de cinquante-cinq kilohertz dans l'exemple évoqué plus haut.

Un circuit de mise en forme 26 permet de convertir le signal qu'il reçoit du démodulateur 25 en un signal de valeur binaire zéro ou un en fonction de la fréquence F1 ou F2 reçue au niveau du circuit amplificateur-écrêteur 22. Ce circuit de mise en forme 26 comporte par exemple un filtre passe-bas du deuxième ordre qui est chargé d'éliminer les fréquences élevées indésirables et de restituer la composante basse fréquence du signal sous la forme d'une suite de créneaux qui, mis en forme à l'aide d'un comparateur, attaquent un inverseur à la sortie duquel est produit le signal binaire destiné à l'interface 13.

Le signal binaire fourni par le circuit de mise en forme 26, qui correspond aux données reçues, transite par une porte de contrôle 27 et par le fil 104 vers l'interface 13. Cette porte 27 a une première entrée connectée en sortie du circuit de mise en forme 26, une seconde entrée reliée en sortie du circuit de détection de porteuse 23 et une troisième entrée reliée, à travers une porte de contrôle 30, au fil 105 acheminant le signal de demande d'émission issu de l'interface 13, de manière à ne transmettre des données à l'interface 13 que durant les intervalles de temps de réception des signaux venant de la ligne 3. La disparition de la demande d'émission issue de l'interface 13, en période de dialogue entre le réseau 11 et le terminal de téléaction 5 et en fin de période d'émission de l'adaptateur de communication 12, autorise le transfert de données vers l'interface 13, via la porte 27, si les signaux de données reçus déclenchent le circuit de détection de porteuse 23.

Le signal de sortie du circuit détecteur de porteuse est aussi appliqué à une entrée de remise à zéro d'un compteur 28 au travers d'un circuit auxiliaire 29. Ce dernier est un classique circuit de remise à zéro permettant d'éviter que le compteur 28 ne soit remis à zéro par des impulsions parasites, il est composé par exemple d'une résistance et d'une diode en parallèle entre le fil 109 et l'entrée de remise à zéro du compteur 28, ainsi que d'un condensateur inséré entre cette entrée et un point de potentiel nul de l'adaptateur 12.

Le compteur 28 reçoit un signal d'horloge du diviseur 20, ce signal sert à produire un autre signal d'horloge à période très longue, par exemple de l'ordre de deux minutes. Le signal d'horloge produit par le compteur 28 a, en l'absence de mise forcée à zéro du compteur, un rapport cyclique de un et la demi-période pendant laquelle il est au niveau zéro débute pour l'état zéro de ce compteur. Le compteur 28 est forcé à zéro par le circuit détecteur de porteuse 23, lorsqu'une porteuse est détectée en provenance de la ligne 3.

Son signal de sortie est appliqué à la porte 30 qui est reliée par ailleurs au fil 105 acheminant le signal de demande d'émission issu de l'interface 13. Le signal de sortie de la porte 30 est appliqué à une entrée de remise à zéro du diviseur programmable 17 pour d'une part forcer à zéro celui-ci et donc empêcher toute émission par son intermédiaire, lorsque simultanément le signal de sortie du compteur 28 est au niveau logique zéro et qu'il n'y a pas de demande d'émission de la part de l'interface 13 et pour d'autre part laisser le diviseur 17 émettre la fréquence F1 ou F2 dans le cas contraire.

Le signal de sortie du compteur 28 est également appliqué à une entrée de la porte de contrôle 18 qui, lorsque ce signal de sortie est au niveau logique un, quel que soit le signal fourni par le fil 103, commande la programmation du diviseur programmable 17 pour l'émission de la fréquence F1 et qui, lorsque ce signal de sortie est au niveau logique zéro, laisse passer inchangé le signal fourni par le fil 103.

Le signal de sortie de la porte 30 est aussi appliqué à une entrée du circuit détecteur de porteuse 23 pour inhiber toute détection de porteuse, en cas d'émission par l'intermédiaire du diviseur programmable 17.

En période de dialogue entre le réseau 11 et le terminal 5, ce dernier reçoit des messages du réseau 11 espacés par des intervalles de temps réservés aux réponses du terminal, ces intervalles ont des durées inférieures à une demi-période de compteur 28. Celui-ci est remis et maintenu à zéro par le circuit détecteur de porteuse 23 à chaque message reçu, son signal de sortie reste alors constamment au niveau logique 0 ce qui rend les portes 18, 27 et 30 transparentes à leurs autres signaux d'entrée.

L'absence de dialogue entre le réseau 11 et le terminal 5 se traduit par une absence prolongée de porteuse en provenance du réseau 11 via la ligne 3. Le compteur 28 n'est plus alors remis à zéro par le circuit détecteur de porteuse 23, il effectue librement ses cycles de comptage et produit un signal de sortie alternativement aux niveaux zéro et un, ce dernier niveau provoque l'émission de la fréquence F1 par le diviseur programmable 17 et le blocage par la porte 27 de la transmission de données vers l'interface 13 pendant toute la durée où il se maintient. Le compteur 28 rythme les émissions et les attentes de réception du terminal de téléaction qui émet la fréquence F1 pendant une demi-période et qui attend la réception d'une interrogation du réseau 11 pendant la demi-période suivante.

A la mise en marche de ce terminal de téléaction 5, aucune porteuse n'est reçue, il n'y a pas de données sur le fil 103 ni de demande d'émission sur le fil 105 et le compteur 28 se trouve dans un état quelconque. Ce compteur 28 compte librement et fournit, un signal de sortie au niveau logique un pendant une demi-période plus ou moins rapidement selon son état initial. Un signal de fréquence F1 est alors émis sur la ligne 3 pendant cette demi-période le diviseur programmable 17 étant forcé en position de production de la fréquence F1 par le niveau un du signal de sortie du compteur 28.

L'émission se poursuit une demi-période sur deux tant qu'il n'y a pas de réponse du réseau 11. Ce dernier peut et doit profiter de l'intervalle de silence du terminal de téléaction 5 pour émettre à son tour à l'aide des fréquences F1 et F2 après chaque période d'émission de ce terminal qui s'étend sur une demi-période du compteur 28.

La réception de signaux de fréquences F1 et/ou F2 déclenche le circuit détecteur de porteuse 23 et active la partie réception de l'adaptateur de communication 12, les données reçues du réseau 11 sont transmises à l'interface 13, via le détecteur de passage à zéro 24, le démodulateur 25, le circuit de mise en forme 26 et la porte 27, cette dernière étant rendue passante par le circuit 23 et la porte 30.

En fonctionnement normal, le réseau 11 interroge cycliquement le terminal de téléaction 5 en envoyant un message par l'intermédiaire de la ligne 3 au moyen des fréquences F1 et F2.

L'interface 13 répond par l'intermédiaire de l'adaptateur de communication 12 en envoyant des données binaires de réponse par le fil 103, après que l'émission du réseau se soit terminée, ce que signale le circuit détecteur de porteuse 23. Les données transmises par le fil 103 traversent la porte 18 et viennent attaquer l'entrée de commande du diviseur programmable 17 qui fait basculer la fréquence des signaux qu'il produit de F1 à F2 et inversement en fonction de la valeur binaire de chacune des données successivement reçues.

Si pour une raison quelconque, l'adaptateur de communication ne reçoit pas de message du serveur pendant une période d'attente de réception telle que définie par le compteur 28, il repasse de lui-même en phase d'émission systématique d'un signal de fréquence F1 une demi-période sur deux, sous le contrôle du compteur 28, soit une minute toutes les deux minutes dans l'exemple choisi, et cela tant que le dialogue n'est pas repris par le réseau 11 par réémission des signaux de fréquences F1 et/ou F2.

## Revendications

1. Adaptateur de communication (12) pour terminal de téléaction (5) qui est connecté à une ligne téléphonique (3) en parallèle avec un poste téléphonique (2) et qui est relié à un réseau de téléaction (11) par la ligne téléphonique pour échanger des informations de téléaction avec au moins un serveur (4) de ce réseau dans le cadre d'une procédure d'exploitation où il est prévu un dialogue à l'alternat entre le terminal et le réseau de téléaction, dans une bande de fréquences différente de celle exploitée par le poste téléphonique en parallèle, et un envoi d'une signalisation caractéristique, en cas d'absence de dialogue au delà d'un laps de temps prédéterminé, par un dispositif de télésignalisation (15) doté de moyens pour déclencher l'envoi de cette signalisation caractéristique, caractérisé en ce qu'il comporte un émetteur-récepteur (14) de données binaires fonctionnant par saut de fréquence entre deux fréquences (F1, F2) de la bande de fréquences différente de celle exploitée par le poste téléphonique, et en ce que les moyens de déclenchement de signalisation caractéristique d'absence de dialogue comportent un dispositif détecteur de porteuse (23), dans un agencement récepteur de l'émetteur-récepteur (14), pour déclencher un compteur lent (28), positionnant un agencement émetteur de l'émetteur-récepteur en émission d'une des fréquences caractéristiques (F1), au delà d'un laps de temps que fixe par comptage ce compteur lent, activé par un oscillateur (19), après une perte de porteuse.

2. Adaptateur de communication selon la revendication 2, caractérisé en ce que le compteur (28) contrôle une porte d'accès (18) des données à l'agencement émetteur (17, 21) chargé de les transmettre au réseau, pour bloquer toute émission autre que celle de la fréquence caractéristique (F1) d'une absence de porteuse reçue du réseau, en cas d'une telle absence au delà dudit laps de temps.

## Patentansprüche

1. Übertragungsadapter (12) für ein Fernwirk-Endgerät (5), das an eine Telefonleitung (3) parallel zu einem Telefonapparat (2) angeschlossen ist und mit einem Fernwirknetz (11) über die Telefonleitung verbunden ist, um Fernwirk-Informationen mit mindestens einem Fernwirk-Zentrum (4) dieses Netzes im Rahmen einer Betriebsprozedur auszutauschen, in der ein Wechsel-Dialog zwischen dem Endgerät und dem Fernwirknetz in einem anderen Frequenzband als dem des parallel betriebenen Telefonapparats sowie eine Aussendung einer charakteristischen Signalisation im Fall eines ausbleibenden Dialogs über eine vorbestimmte Zeitdauer hinweg vorgesehen ist, wobei diese Aussendung von einer Fernsignalisierungs-Vorrichtung (15) erfolgt, die Mittel zum Start der Aussendung dieser charakteristischen Signalisierung besitzt, dadurch gekennzeichnet, daß der Adapter einen Sender-Empfänger (14) für Binärdaten aufweist, der aufgrund von Frequenzsprüngen zwischen zwei Frequenzen (F1, F2) in einem anderen Frequenzband als dem im Telefonverkehr benutzten Frequenzband funktioniert, und daß die Mittel zum Auslösen der für das Ausbleiben des Dialogs charakteristischen Signalisierung eine Trägerfrequenz-Detektorvorrichtung (23) in einem Empfangsteil des Sender-Empfängers (14) aufweisen, um einen langsamen Zähler (28) zu starten, der ein Senderteil des Sender-Empfängers auf Sendebetrieb in einer der charakteristischen Frequenzen (F1) nach einer Zeitdauer einstellt, die der langsame Zähler nach einem Trägerfrequenz-Verlust durch sein von einem Oszillator (19) aktiviertes Zählen festlegt.

2. Übertragungsadapter nach dem Anspruch 1, dadurch gekennzeichnet daß der Zähler (28) ein Tor (18) steuert, das den Zugang der Daten zu dem mit der Übertragung zum Netz betrauten Senderteil (17, 21) steuert, um jede andere Aussendung als die der für das Ausbleiben des Trägerfrequenz-Empfangs vom Netz charakteristische Frequenz zu blockieren, wenn die Trägerfrequenz länger als dieses Zeitintervall ausbleibt.

## Claims

1. A communications adaptor (12) for a remote action terminal (5) which is connected to a telephone line (3) in parallel with a telephone set (2) and which is connected to a remote action network (11) by the telephone line in order to interchange remote action data with at least one server (4) of said network in the context of an operating procedure where an alternating dialog is provided between the terminal and the remote action network in a frequency band different from that used by the parallel telephone set, and where characteristic signalling is sent in the event of dialog being absent for longer than a predetermined time lapse, said signalling being sent by a remote signalling device (15) provided with means for triggering the transmission of said characteristic signalling, said adaptor being characterized in that it includes a binary data transmitter/receiver (14) operating by frequency shift keying between two frequencies (F1, F2) of the frequency band different from that used by the telephone set, and in that the means for triggering the signalling characteristic of absence of dialog comprise a carrier detector device (23) inserted in a receiver side of the transmitter/receiver (14) for triggering a slow counter (28), positioning a transmitter side of the transmitter/receiver being set to transmit one of the characteristic frequencies (F1) on expiry of the time lapse fixed by the slow counter and counting from the loss of carrier, the counter being driven by an oscillator (19).

2. A communications adaptor according to claim 1, characterized in that the counter (28) controls a gate (18) for giving data access to the transmitter side (17, 21), for transmitting the data to the network, said gate being controlled to prevent any transmission other than the frequency (F1) characteristic of an absence of carrier received from the network, in the event of such an absence extending beyond said time lapse.
